(19) Europäisches Patentamt

European Patent Office

Office européen des brevets

(11) **EP 0 735 963 B1**

## (12) EUROPÄISCHE PATENTSCHRIFT

(45) Veröffentlichungstag und Bekanntmachung des Hinweises auf die Patenterteilung:
**25.03.1998 Patentblatt 1998/13**

(21) Anmeldenummer: **95901346.7**

(22) Anmeldetag: **22.11.1994**

(51) Int. Cl.$^6$: **B61L 3/00**, G05B 13/02, B60L 15/00

(86) Internationale Anmeldenummer:
**PCT/DE94/01427**

(87) Internationale Veröffentlichungsnummer:
**WO 95/17326 (29.06.1995 Gazette 1995/27)**

(54) **EINRICHTUNG ZUR STEUERUNG EINES SPURGEFÜHRTEN FAHRZEUGS**

DEVICE FOR GUIDING A RAILBORNE VEHICLE

DISPOSITIF DE COMMANDE D'UN VEHICULE GUIDE SUR RAILS

(84) Benannte Vertragsstaaten:
IT

(30) Priorität: **20.12.1993 DE 9319830 U**

(43) Veröffentlichungstag der Anmeldung:
**09.10.1996 Patentblatt 1996/41**

(73) Patentinhaber:
**SIEMENS AKTIENGESELLSCHAFT**
**80333 München (DE)**

(72) Erfinder:
• PRIEBE, Olaf
  D-38118 Braunschweig (DE)
• VOSS, Hans-Jürgen
  D-38126 Braunschweig (DE)

(56) Entgegenhaltungen:
EP-A- 0 092 832

• AUTOMATISIERUNGSTECHNIK, SEPT. 1994, GERMANY, Bd. 42, no.9, ISSN 0178-2312, VOIT F ET AL 'Fuzzy control versus conventional control by way of illustration of the metro Milano'
• PROCEEDINGS OF THE INTERNATIONAL WORKSHOP ON ARTIFICIAL INTELLIGENCE FOR INDUSTRIAL APPLICATIONS: IEEE AI '88 (CAT. NO.88CH2529-6), HITACHI CITY, JAPAN, 25-27 MAY 1988, 1988, NEW YORK, NY, USA, IEEE, USA, Seiten 485-489, OSHIMA H ET AL 'Automatic train operation system based on predictive fuzzy control'
• CONTROL IN TRANSPORTATION SYSTEMS. PROCEEDINGS OF THE 4TH IFAC/IFIP/IFORS CONFERENCE, BADEN BADEN, WEST GERMANY, 20-22 APRIL 1983, ISBN 0-08-029365-4, 1984, OXFORD, UK, PERGAMON, UK, Seiten 33-39, YASUNOBU S ET AL 'Fuzzy control for automatic train operation system'
• DATABASE INSPEC INSTITUTE OF ELECTRICAL ENGINEERS, STEVENAGE, GB Inspec No. 3981746, YASUOKA S 'Application of fuzzy control to traffic systems' & JOURNAL OF THE INSTITUTE OF ELECTRICAL ENGINEERS OF JAPAN, JAN. 1991, JAPAN, Bd. 111, no.1, ISSN 0020-2878, Seiten 23-25,
• PROCEEDINGS IECON '84. 1984 INTERNATIONAL CONFERENCE ON INDUSTRIAL ELECTRONICS, CONTROL AND INSTRUMENTATION (CAT. NO. 84CH1991-9), TOKYO, JAPAN, 22-26 OCT. 1984, 1984, NEW YORK, NY, USA, IEEE, USA, Seiten 657-662 vol., YASUNOBU S ET AL 'Application of predictive fuzzy control to automatic train operation controller'

## Beschreibung

Die Erfindung bezieht sich auf eine Einrichtung nach dem Oberbegriff des Anspruches 1.

Die Aufgabe, ein spurgeführtes Fahrzeug entlang eines vorgegebenen Sollgeschwindigkeits-Fahrprofils zu führen, läßt sich durch einen Regler bewerkstelligen, der die Ist-Geschwindigkeit des Fahrzeugs laufend dem vorgegebenen Soll-Profil anpaßt. Die Implementierung eines solchen Reglers ist aber außerordentlich schwierig, weil das Fahrverhalten des Fahrzeugs nicht in allen Einzelheiten bekannt ist und weil durch Schlupf- und Gleitvorgänge hinsichtlich des jeweiligen Fahrortes des Fahrzeugs Unsicherheiten bestehen, die einen optimalen Soll/Ist-Abgleich erschweren. So unterscheidet sich das Fahrverhalten der einzelnen Fahrzeuge nicht nur bei unterschiedlichen Typen von Fahrzeugen voneinander, sondern auch bei einzelnen Individuen des gleichen Fahrzeugtyps und zwar insbesondere während des Bremsvorganges. So gibt es zum Beispiel Fahrzeuge mit elektrischen und pneumatischen Bremsen, bei denen die elektrischen Bremsen bei niedrigen Fahrgeschwindigkeiten zunehmend wirkungsloser werden und bei denen ab einer bestimmten unteren Geschwindigkeit, die aber auch nur ungenau zu bestimmen ist, zusätzlich pneumatische Bremsen wirksam werden. Das Fahrverhalten solcher Fahrzeuge ist kaum reproduzierbar mit der Folge, daß es nicht möglich ist, ein allgemeingültiges Fahrzeugmodell für die Dimensionierung eines fahrzeugseitigen Geschwindigkeitsreglers anzugeben. Hinzu kommen die schon erwähnten Fehler bei der Ortserfassung eines Fahrzeugs und der Bestimmung seiner Geschwindigkeit.

Die Schwierigkeiten, die sich bei der Implementierung herkömmlicher Regler für die Fahrzeugsteuerung ergeben können, lassen sich durch Anwendung von FUZZY-Logik weitgehend vermeiden, weil hier kein exaktes mathematisches Modell der Regelstrecke vorliegen muß und zur Implementierung der Regler auch keine Regelungsexperten erforderlich sind.

Aus der EP 0 092 832 B1 ist eine Einrichtung zur Zielbremsung von spurgeführten Fahrzeugen bekannt, die mit FUZZY-Logik arbeitet. Bei dieser Einrichtung wird festgestellt, wo das Fahrzeug vermutlich zum Halten kommen würde, wenn die gerade wirksamen Bremskräfte beibehalten werden. Dann wird der so prognostizierte Zielort mit dem Soll-Zielort verglichen und hieraus hergeleitet, ob die Bremskräfte im Sinne einer Optimierung der Zielbremsung erhöht oder vermindert werden müssen. Es wird dann durch einen erneuten Rechengang festgestellt, ob sich unter Ansatz so geänderter Bremskräfte eine weitere Optimierung des Bremsergebnisses erreichen läßt. Ist dies der Fall, so werden die für die Rechnung verwendeten geänderten Bremswerte eingestellt, wobei später erneut durch entsprechende Rechenvorgänge geprüft werden kann, ob sich das Bremsergebnis noch weiter optimieren läßt.

Diese bekannte Einrichtung zur Optimierung eines Bremsvorganges beruht ausschließlich auf dem Vergleich zweier prognostizierter Bremsverläufe. Ob sich das Fahrzeug in der Wirklichkeit tatsächlich so verhält, wie bei der Berechnung seines weiteren Fahrverlaufes angenommen wurde, steht sehr in Zweifel, insbesondere dann, wenn wie bereits geschildert, das Bremsverhalten des Fahrzeugs nicht hinreichend genau reproduzierbar ist und sich von Fall zu Fall ändert. Dann können sich durchaus erhebliche Abweichungen zwischen tatsächlichem Zielort und rechnerisch ermitteltem Zielort ergeben, die für bestimmte Anwendungen nicht mehr tragbar sind, beispielsweise, wenn Fahrzeuge an vorgegebenen Punkten in den Bahnhöfen zum Halten kommen sollen. Ähnliches gilt für das Beschicken oder Entleeren von Güterwagen an vorgegebenen Positionen, die mit einer Genauigkeit von einem oder einigen Dezimetern angesteuert werden müssen. Die bekannte Einrichtung ist auch ausschließlich für die Zielbremsung konzipiert, nicht jedoch für die Beschleunigung eines Fahrzeugs und sein Vorrücken mit konstanter Geschwindigkeit.

Aufgabe der vorliegenden Erfindung ist es, eine Einrichtung nach dem Oberbegriff des Anspruches 1 anzugeben, die es erlaubt, ein Fahrzeug auf seiner gesamten Fahrt vom Start bis zum Ziel entlang eines vorgegebenen Geschwindigkeits-Fahrprofils zu führen und dabei in die Geschwindigkeitsregelung das tatsächliche Fahrverhalten des Fahrzeugs einzubeziehen.

Die Erfindung löst diese Aufgabe durch die kennzeichnenden Merkmale des Anspruches 1. Dadurch, daß für die Steuerung eines Fahrzeugs in den verschiedenen Betriebsphasen unterschiedliche Reglerstrukturen zur Anwendung kommen, ist ein optimales Eingehen auf das Fahrverhalten des Fahrzeugs in den einzelnen Betriebsphasen möglich. Die erfindungsgemäße Einrichtung verwendet erstmalig als Eingangsgröße für die Regler in allen Betriebsphasen durchgängig die Fahrzeugbeschleunigung.

Die Nachführung der Ist-Beschleunigung eines Fahrzeugs an eine vorgegebene Soll-Beschleunigung beim Abbremsen eines Fahrzeugs ist bereits aus der DE-AS 14 55 364 bekannt. Mit der dort offenbarten Bremsregelung lassen sich aber keine optimalen Bremsergebnisse im Hinblick auf Genauigkeit der Zielbremsung und Ruckbegrenzung beim Einleiten eines Bremsvorganges und beim Anhalten des Fahrzeugs erreichen, weil mindestens zu Beginn der Bremsung Ist- und Soll-Beschleunigung stark voneinander abweichen, was insbesondere bei möglichst ruckfreiem Bremsen im Verlauf des weiteren Bremsvorganges zu erhöhten Soll-Beschleunigungswerten führen muß, die wiederum ein ruckfreies Anhalten des Fahrzeugs am Zielpunkt erschweren. Für die Steuerung des Fahrzeugs in der Anfahr- und in der Beharrungsphase gibt die DE-AS überhaupt keine Lösungsansätze.

Vorteilhafte Weiterbildungen und Ausgestaltungen der erfindungsgemäßen Einrichtung sind in den Unteransprüchen angegeben. So benennt der Anspruch 2 die Maßnahmen, die auf dem Fahrzeug zum Umschalten von der einen auf eine andere Reglerstruktur führen.

Die Ausgabe von Sollkraftinkrementen gemäß Anspruch 3 gestattet eine sanfte ruckfreie Fahrt sowohl beim Beschleunigen als auch beim Abbremsen; größere Stellkraftunterschiede werden danach durch zyklische Verarbeitung von Soll- und Istgrößen schrittweise herbeigeführt.

Die Zustandsgrößenermittlung soll nach der Lehre des Anspruches 4 ohne weitere Meßaufnehmer aus dem jeweiligen Ist-Fahrort eines Fahrzeugs ermittelt werden, weil die Mittel zur Bestimmung des jeweiligen Fahrortes ohnehin auf dem Fahrzeug vorhanden sind.

Die Ansprüche 5 bis 8 benennen die einzelnen Reglerstrukturen, die während des Beschleunigens, des Vorrückens mit konstanter Geschwindigkeit sowie während des Bremsens wirksam sind.

Dabei soll gemäß Anspruch 9 trotz der Verwendung unterschiedlicher Reglerstrukturen für verschiedene Betriebsphasen der gleiche Regler verwendet werden.

Anspruch 10 lehrt die Synchronisierung der fahrzeugseitigen Wegmeßeinrichtung an vorgegebenen Ortsmarken, vorzugsweise für den Nahbereich des Zielpunktes, als Mittel zur Verbesserung des Bremsergebnisses, wobei gemäß Anspruch 11 vorzugsweise mindestens drei Ortsmarken vorgesehen sein sollen.

Die Erfindung ist nachstehend anhand der Zeichnung näher erläutert. Die Zeichnung zeigt in

| | |
|---|---|
| Figur 1 | den Wechsel der einzelnen Reglerstrukturen in den einzelnen Betriebsphasen, in |
| Figur 2 | das Prinzip der Umschaltung von der Beschleunigungs- und Beharrungsphase auf die Bremsphase, in |
| Figur 3 | den Aufbau des Reglers für die Steuerung des Fahrzeugs in der Beschleunigungs- und Beharrungsphase, in der |
| Figur 4 und 5 | die Rulebases, nach denen sich die auf den Antrieb wirkenden Soll-Kraftinkremente ergeben, in |
| Figur 6 | die Regleranordnung für eine erste Bremsphase, in |
| Figur 7 | die Regleranordnung für eine zweite Bremsphase, in |
| Figur 8 | die Regleranordnung für eine dritte Bremsphase und in |
| Figur 9 | die Rulebase für den in Figur 8 dargestellten Regler. |

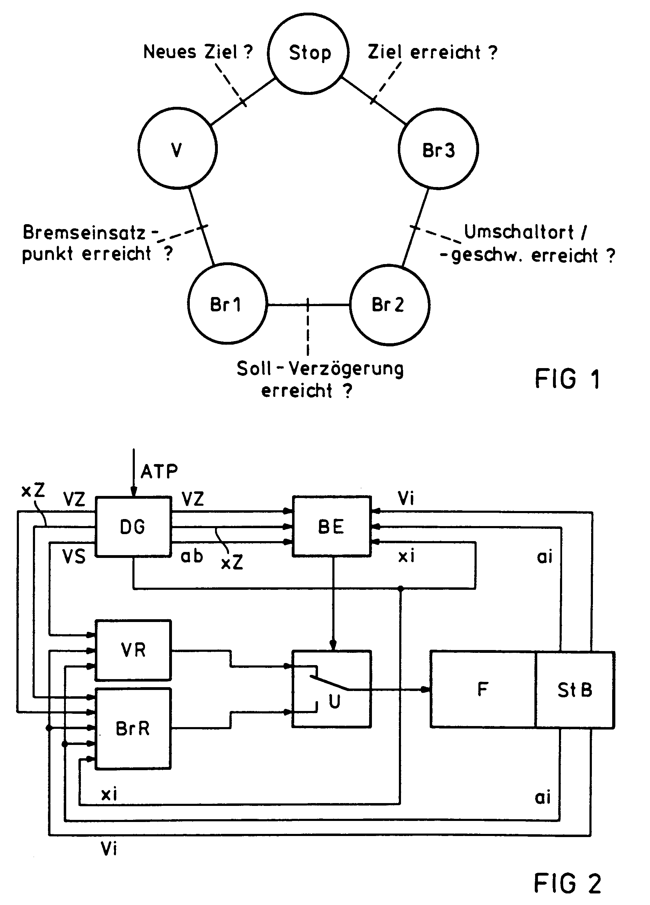

Figur 1 zeigt schematisch fünf Regelungsphasen, die das Fahrzeug auf seinem Wege von einem Startpunkt zu einem Zielpunkt durchläuft, wobei sowohl für den Startpunkt als auch für den Zielpunkt die Fahrgeschwindigkeit Null angenommen wurde.

Zu Beginn des Beobachtungszeitraumes möge sich das Fahrzeug im Stillstand befinden; dies wird symbolisiert durch die Regelungsphase Stop. Sobald das Fahrzeug auf ein neues Ziel vorrücken soll und die Fahrtfreigabe erfolgt ist, setzt eine Geschwindigkeitsregelung V ein. Für diese Geschwindigkeitsregelung werden später näher erläuterte Reglerstrukturen wirksam, die das Fahrzeug ruckfrei auf eine vorgegebene Geschwindigkeit beschleunigen und auf dieser Geschwindigkeit halten. Nähert sich das Fahrzeug seinem jeweiligen Zielpunkt, so geht die Geschwindigkeitsregelung V in eine Bremsregelung Br1 über. Hierzu berechnet die Regelung in jedem Zyklus den aktuell benötigten Bremsweg und bestimmt durch Vergleich von tatsächlichem Fahrort des Fahrzeugs und Zielort denjenigen Punkt, an dem die Bremsung eingeleitet werden muß. Es gibt insgesamt drei Bremsphasen, die aufeinanderfolgend wirksam sind. In allen drei Bremsphasen sind unterschiedliche Reglerstrukturen für die Fahrzeugsteuerung aktiv. In der Bremsphase Br1 wird die Verzögerung aufgebaut. Ist die Sollverzögerung erreicht, wechselt das Fahrzeug in die Bremsphase Br2, in der es seine Fahrgeschwindigkeit an eine vorgegebene Soll-Bremskurve angleicht. In der Nähe des Zielpunktes geht das Fahrzeug in die Bremsphase Br3 über; dies geschieht bei einer festgelegten Geschwindigkeit oder bei einem bestimmten Abstand zum Zielort. In der Bremsphase Br3 erfolgt das zielgenaue Anhalten des Fahrzeugs am jeweiligen Zielpunkt. Ist das Ziel erreicht, befindet sich das Fahrzeug wieder in seinem angenommenen Ausgangs-Betriebszustand.

Um ein Fahrzeug möglichst ruckfrei über eine Strecke zu führen und es zielpunktgenau auf ein vorgegebenes Ziel oder auf eine vorgegebene Zielgeschwindigkeit zu führen, werden auf dem Fahrzeug aufeinanderfolgend unterschiedliche Reglerstrukturen wirksam, wobei in diesen unterschiedlichen Reglerstrukturen einzelne Reglerkomponenten beibehalten werden. Auf die konkrete Ausbildung der für die Steuerung des Fahrzeugs in den einzelnen Betriebsphasen verwendeten Reglerstrukturen wird nachfolgend näher eingegangen.

Figur 2 zeigt zunächst den prinzipiellen Aufbau der erfindungsgemäßen Fahrzeugsteuerungseinrichtung, bei der unterschieden wird zwischen der Geschwindigkeitsregelung VR und der Bremsregelung BrR; in dieser Bremsregelung verbergen sich die drei Bremsphasen Br1 bis Br3 nach Figur 1. Die beiden Regler wirken ausgangsseitig über einen Umschalter U auf den Antrieb eines Fahrzeugs F. Ein Störgrößenbeobachter StB bestimmt aus dem jeweils zurückgelegten Fahrweg die Fahrzeuggeschwindigkeit Vi und die Fahrzeugbeschleunigung ai und führt diese einer Bremseinsatzpunktberechnung BE sowie der Bremsregelung BrR zu. Der Bremseinsatzpunktberechnung wird ferner von einer Sollwertaufbereitung DG Sollwerte zugeführt. Dies sind der Ort xZ des nächsten Zielpunktes, die am Zielpunkt geforderte Zielgeschwindigkeit Vz sowie die jeweils gültige betriebliche Bremsverzögerung ab. Diese Größen werden der Sollwertaufbereitung von der Linien-Zugbeeinflussung ATP übermittelt. Aus der aktuellen Geschwindigkeit, der Zielgeschwindigkeit und der betrieblichen Bremsverzögerung ermittelt die Bremseinsatzpunktberechnung BE denjenigen Streckenpunkt, an dem der Bremsvorgang beginnen soll und prüft anhand des ihr von der Ortserfassung mitgeteilten tatsächlichen Fahrortes $x_i$ des Fahrzeugs, ob das Fahrzeug diesen Bremseinsatzpunkt erreicht hat oder nicht. Solange das Fahrzeug den Bremseinsatzpunkt nicht erreicht hat, ist die Geschwindigkeitsregelung VR wirksam; mit dem Passieren des Bremseinsatzpunktes veranlaßt die Bremseinsatzpunktberechnung über den Umschalter U das Umschalten auf die Reglerstrukturen für die Bremsregelung BrR.

Für die Geschwindigkeitsregelung VR werden als Eingangsgrößen für die Beschleunigungs- und die anschließende Beharrungsphase die Fahrzeuggeschwindigkeit $V_i$, die Fahrzeugbeschleunigung $a_i$ sowie die Sollgeschwindigkeit $V_s$ berücksichtigt, auf die das Fahrzeug zum Beispiel aus dem Stillstand beschleunigt werden soll. Für die Bremsregelung werden neben der jeweiligen Fahrzeuggeschwindigkeit $V_i$, dem augenblicklichen Fahrort $x_i$, dem Zielort $x_Z$ und der Fahrzeugbeschleunigung $a_i$ als Eingangsgrößen die jeweilige Zielgeschwindigkeit $V_z$ bewertet, und zwar jeweils nach unterschiedlichen Strategien in den drei anhand der Figur 1 erläuterten Bremsphasen.

Im nachfolgenden sind die jeweils wirksamen Reglerstrukturen im einzelnen erläutert. Die verwendeten Regler sind als ein- bzw. zweidimensionale FUZZY-Regler ausgeführt. Auf welche Art und Weise diese FUZZY-Regler die ihnen zugeführten Eingangsgrößen durch Fuzzyfizierung, Inferenz und Defuzzyfizierung in konkrete Ausgangswerte umsetzen, ist an sich bekannt und wird nachfolgend nur soweit erläutert als es für das Verständnis der Wirkungsweise der Erfindung erforderlich ist. Zur Wirkungsweise solcher Regler wird verwiesen z. B. auf die Zeitschrift "ABB Technik" 3/93, Seiten 13 bis 20. Bei der Erläuterung der Wirkungsweisen der verwendeten FUZZY-Regler wird lediglich bezug genommen auf die in den Reglern implementierten Rulebases, die erkennen lassen, in welchen Wertebereichen die Reglerausgangsgrößen bei welchen Wertebereichen der Reglereingangsgrößen gelegen sind.

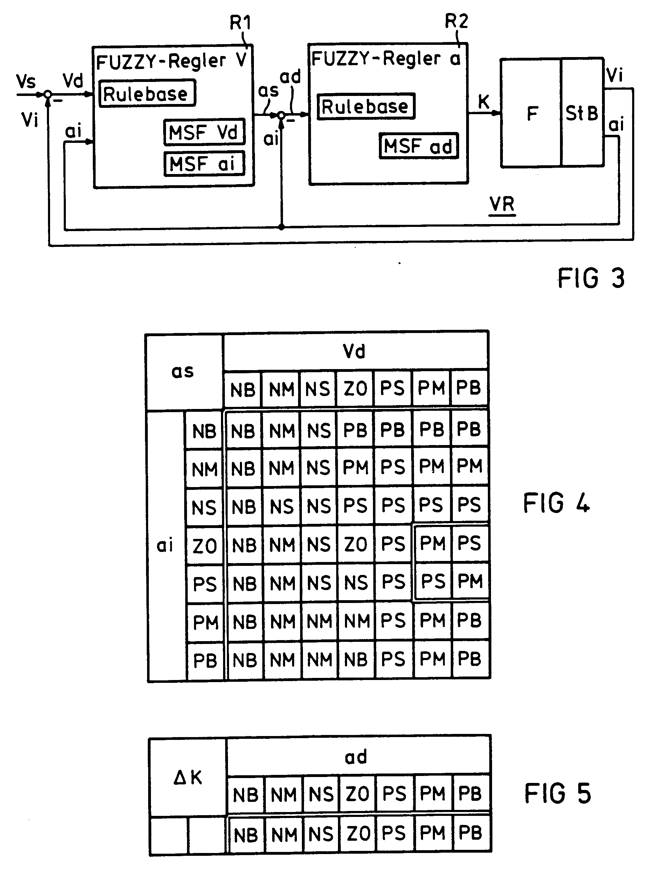

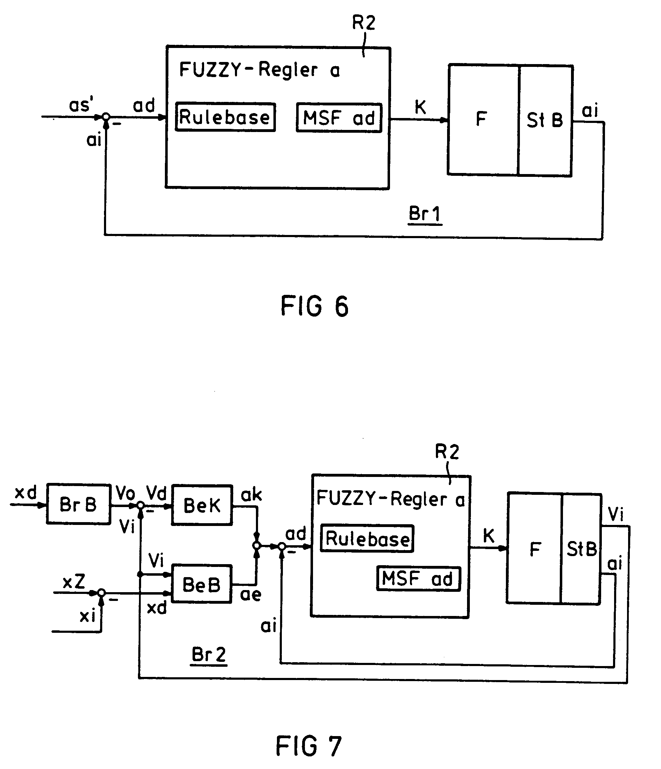

Figur 3 zeigt die für die Geschwindigkeitsregelung in der Beschleunigungs- und Beharrungsphase verwendeten FUZZY-Regler. Es handelt sich dabei um einen zweidimensionalen FUZZY-Geschwindigkeitsregler R1 mit einem in Kaskade geschalteten eindimensionalen FUZZY-Beschleunigungsregler R2. Am Ausgang dieses letztgenannten Reglers wird ein auf den Antrieb des Fahrzeugs F wirkendes Sollkraft-Inkrement $\Delta$ K ausgegeben, das ein ruckfreies Beschleunigen des Fahrzeugs zuläßt. Über einen in Figur 3 nicht dargestellten Störgrößenbeobachter werden die Ist-Geschwindigkeit $V_i$ des Fahrzeugs sowie seine Ist-Beschleunigung $a_i$ bestimmt und dem Eingang der Regelstrecke zugeführt. Beide Größen ermittelt der Störgrößenbeobachter aus dem vom Fahrzeug jeweils zurückgelegten Fahrweg sowie aus den an das Fahrzeug ausgegebenen Stellkräften; für die Bestimmung dieser Größen sind also auf dem Fahrzeug keine gesonderten Aufnehmer erforderlich. Die Fahrzeug-Ist-Beschleunigung $a_i$ wird dem FUZZY-Geschwindigkeitsregler R1 auf einem ersten Eingang direkt zugeführt. Die Ist-Geschwindigkeit $V_i$ des Fahrzeugs wird von der Soll-Geschwindigkeit $V_s$, auf die das Fahrzeug beschleunigen soll, abgezogen, und die aus beiden Größen gebildete Differenzgeschwindigkeit $V_d$ wird dem anderen Eingang des FUZZY-Geschwindigkeitsreglers R1 zugeführt. Nach Maßgabe der im FUZZY-Regler R1 abgelegten und in Figur 4 dargestellten Rulebase bestimmt der FUZZY-Regler die Soll-Beschleunigung $a_s$, mit der das Fahrzeug auf eine vorgebbare Soll-Geschwindigkeit beschleunigen soll. Die Rulebase nach Figur 4 bezeichnet in der Abszisse insgesamt sieben Bereiche für die Differenzgeschwindigkeit $V_d$ und in der Ordinate ebenfalls sieben Bereiche für die Ist-Beschleunigung $a_i$ des Fahrzeugs. Die einzelnen Bereiche sind mit den Buchstaben N für negativ, P für positiv sowie B für big, M für medium und S für small bezeichnet. Zusätzlich gibt es noch Regelabweichungen Z0 für zero. Die Rulebase besagt zum Beispiel, daß dann, wenn die Ist-Beschleunigung $a_i$ des Fahrzeugs Null ist, also das Fahrzeug steht und die Differenzgeschwindigkeit $V_d$ ebenfalls Null ist, das heißt, noch keine Soll-Geschwindigkeit vorgegeben ist, die Soll-Beschleunigung $a_s$ im Bereich Z0 liegen soll, das heißt, das Fahrzeug noch nicht anfahren soll. Sobald die Soll-Geschwindigkeit $V_s$ für die Fahrzeugsteuerung zu berücksichtigen ist, wird die Abweichung zwischen Soll- und Ist-Geschwindigkeit relativ groß sein. Die scharfen Eingangswerte des Reglers (Differenzgeschwindigkeit $V_d$ und Ist-Beschleunigung $a_i$) werden nun fuzzyfiziert, d. h. bestimmten Wertebereichen (membership functions MSF) zugewiesen und ihre Anteile an den gewählten Wertebereichen der Eingangsgrößen werden bestimmt. Damit ist festgelegt, welche Regeln der Rulebase zur Anwendung kommen. Da die scharfen Eingangswerte des Reglers bei Wertebereichen, die sich jeweils z. B. um 50 % überlappen, üblicherweise in zwei benachbarten Wertebereichen liegen, bestimmt sich der vom Regler auszugebende scharfe Wert bei einem zweidimensionalen FUZZY-Regler (zwei Eingangsgrößen) regelmäßig aus vier der in der Rulebase festgelegten Regeln. So ist zum Beispiel die Differenzgeschwindigkeit $V_d$ kurz nach Fahrtaufnahme sowohl Teil des Geschwindigkeitsbereiches PB = positive big als auch Teil des Geschwindigkeitsbereiches PM = positive medium. In entsprechender Weise liegt die Ist-Beschleunigung $a_i$ des Fahrzeugs sowohl im Beschleunigungsbereich Z0 = zero als auch im Beschleunigungsbereich PS = positive small. Bei allen anderen in der Rulebase hinterlegten Regeln ist der Anteil der scharfen Eingangswerte an den einzelnen Wertebereichen gleich null, d. h. diese Regeln wirken augenblicklich an der Bestimmung eines Ausgangswertes des Reglers nicht mit. Für die Bestimmung des Ausgangswertes des FUZZY-Geschwindigkeitsreglers R1 kommen ausschließlich die vier in Figur 4 durch eine Umrandung hervorgehobenen Regeln zur Anwendung, wobei jede dieser Regeln zu einem bestimmten Teil zum Endergebnis beiträgt. Dieser Anteil bestimmt sich aus dem Grad der Zugehörigkeit der scharfen Eingangswerte zu den einzelnen Wertebereichen. Durch das Verfahren der sogenannten Inferenz ergeben sich regelmäßig zwei verschiedene Ausgangswerte der Ausgangsgrößen, hier der Soll-Beschleunigung as, die benachbarten Wertebereichen der Ausgangsgröße angehören. Aus diesen beiden Ausgangswerten, die dargestellt sind durch ihren Anteil an den jeweiligen Ausgangswertebereichen, wird durch sogenannte Defuzzyfizierung ein scharfer Ausgangswert für die Soll-Beschleunigung as gebildet. Aus diesem Wert der Soll-Beschleunigung as und dem vom Störgrößenbeobachter des Fahrzeugs bestimmten Wert der Ist-Beschleunigung ai wird nun die Differenz-Beschleunigung ad gebildet und dem Eingang eines nachgeschalteten FUZZY-Beschleunigungsreglers R2 zugeführt. Dieser FUZZY-Regler hat die Aufgabe, das ihm zugeführte Eingangssignal as in ein Ausgangssignal $\Delta K$ (Sollkraftinkrement) umzusetzen. Die eigentliche Sollkraft K wird aus diesem Wert durch Integration ermittelt und dem Fahrzeug zugeführt. Der zweite Regler R2 bestimmt damit die Antriebskraft des Fahrzeugs. Seine Rulebase ist in Figur 5 dargestellt; er sieht eine proportionale Umsetzung der ihm zugeführten Eingangsgröße ad in eine entsprechende Ausgangsgröße $\Delta K$ vor. Durch die Festlegung geeigneter Rules in der Rulebase des FUZZY-Geschwindigkeitsreglers R1 wird erreicht, daß sich die Regler-Ausgangsgrößen des FUZZY-Beschleunigungsreglers R2 bei Änderung der Regler-Eingangsgrößen Vd und ai nicht schlagartig, sondern schrittweise ändern. Durch dieses Inkrementieren der Ausgangsgröße, das auch für den Bremsvorgang gilt, läßt sich ein weitgehend ruckfreies Anfahren und Bremsen erreichen.

Die Regler arbeiten zyklisch, wobei sie die dann jeweils vorhandenen scharfen Eingangsgrößen durch Fuzzyfizierung, Inferenzierung und Defuzzyfizierung in scharfe Ausgangsgrößen umsetzen und diese dem folgenden Regler oder dem Fahrzeugantrieb zuführen. Soweit sich die Eingangswerte oder einer der Eingangswerte soweit geändert hat, daß er nunmehr in andere als die vorstehend berücksichtigten Wertebereiche fällt, kommen jeweils andere Regeln der Rulebase zur Anwendung; die Bestimmung der scharfen Ausgangswerte erfolgt nach den gleichen Gesetzmäßigkeiten wie bei den zuvor behandelten Eingangsgrößen.

Bei dem FUZZY-Beschleunigungsregler R2 handelt es sich im Gegensatz zu dem zweidimensionalen FUZZY-Geschwindigkeitsregler R1 um einen eindimensionalen Regler, bei dem üblicherweise durch das ihm zugeführte Eingangssignal jeweils zwei Regeln aktiviert sind. Damit vereinfacht sich die Bildung des Ausgangswertes gegenüber einem zweidimensionalen Regler.

Die Geschwindigkeitsregelung über die in Figur 3 dargestellte Regleranordnung ist solange wirksam, solange das Fahrzeug auf eine konstante Soll-Geschwindigkeit Vs zu regeln ist, das heißt während der gesamten Beschleunigungsphase und während der anschließenden Beharrungsphase. Für die Verzögerung des Fahrzeugs beim Abbremsen ist diese Regleranordnung jedoch nicht geeignet, weil hier stets auf unterschiedliche Soll-Geschwindigkeiten nachzuführen ist, was durch Über- oder Unterschwingen der Ist-Geschwindigkeit des Fahrzeugs gegenüber der Soll-Geschwindigkeit zu einem unruhigen Fahrzeugverlauf führen würde. Aus diesem Grund kommen für die Verzögerung des Fahrzeugs die nachstehend näher erläuterten Regler-Anordnungen zur Anwendung:

Figur 6 zeigt die Regler-Anordnung, die in der Bremsphase Br1 wirksam ist. In der Bremsphase Br1 baut sich die Ist-Verzögerung ai auf, bis sie schließlich die für eine Soll-Bremskurve berücksichtigte Soll-Verzögerung as' erreicht; die Ist-Verzögerung ai wird wieder über einen fahrzeugseitigen Störgrößenbeobachter StB ermittelt. Der Regler R2, über den die Ist-Verzögerung des Fahrzeugs aufgebaut wird, ist der schon aus Figur 3 bekannte FUZZY-Beschleunigungsregler R2. Dem Eingang des Reglers wird die Differenz-Beschleunigung ad aus der konstanten Soll-Beschleunigung as' und der sich aufbauenden Ist-Beschleunigung ai des Fahrzeugs zugeführt. Der FUZZY-Beschleunigungsregler R2 bestimmt die Soll-Kraft für die Steuerung der Fahrzeugbremsen, wobei diese Soll-Kraft vom FUZZY-Regler inkrementiert wird, das heißt, sie baut sich schrittweise in den zyklisch ablaufenden Regelphasen auf, so daß auch das Bremsen des Fahrzeugs ruckfrei vonstatten geht.

Die in Figur 6 dargestellte Regleranordnung ist wirksam vom Beginn des Bremsvorganges bis zu dem Moment, an dem die Ist-Beschleunigung ai des Fahrzeugs der vorgegebenen Soll-Beschleunigung as entspricht. Dabei wird die Ist-Geschwindigkeit des Fahrzeugs, bedingt durch das Inkrementieren der Soll-Kraft und dem langsamen Aufbau der Bremsverzögerung, durchaus verschieden sein von der am jeweiligen Fahrort durch die Soll-Bremskurve vorgegebenen Soll-Geschwindigkeit. In einer folgenden Bremsphase Br2 wird deshalb nach dem Aufbau der Bremsverzögerung eine Angleichung der Ist-Geschwindigkeit an eine sich aus der Bremskurvenberechnung BrB ergebende optimale Soll-Geschwindigkeit Vo herbeigeführt. Zu diesem Zweck wird zunächst der Abstand xd des Fahrzeugs zum jeweiligen Zielpunkt bestimmt. Dieser Abstand ergibt sich aus der Differenz des Zielpunktes xZ, der dem Fahrzeug über die ATP ständig übermittelt wird und dem Fahrort xi des Fahrzeugs. Diesen Fahrort ermittelt das Fahrzeug z. B. durch Zählen von Radimpulsen einer vorzugsweise nicht angetriebenen Fahrzeugachse, wobei die so gemessene Wegstrecke ggf. durch an der Strecke angeordnete Synchronisationsmarken zur Minimierung von Fehlortungen korrigierbar sein kann. Aus dem augenblicklichen Abstand xd zum jeweiligen Zielpunkt und der vom Störgrößenbeobachter StB bestimmten Ist-Geschwindigkeit Vi wird nun eine Beschleunigungsberechnung BeB durchgeführt, deren Ergebnis ae besagt, mit welcher Verzögerung das Fahrzeug verzögern müßte, um den Zielpunkt mit der Zielgeschwindigkeit zu erreichen. Die errechnete Verzögerung ae bestimmt nach der Formel

$$ae = \frac{Vi^2 - Vz^2}{2\,xd}.$$

Für die Bremsensteuerung wird nun aber nicht die Differenz aus der tatsächlichen Bremsverzögerung ai des Fahrzeugs und der berechneten Bremsverzögerung ae verwendet, sondern die berechnete Bremsverzögerung ae wird noch nach Maßgabe einer Korrekturverzögerung ak modifiziert. Diese Korrekturverzögerung ist Ergebnis einer Beschleunigungskorrektur BeK; ihr Wert ist abhängig von der Differenzgeschwindigkeit Vd der Ist-Geschwindigkeit Vi von der rechnerisch bestimmten optimalen Geschwindigkeit Vo. Diese optimale Geschwindigkeit ergibt sich aus der Bremskurvenberechnung BrB und bezeichnet diejenige Geschwindigkeit, die das Fahrzeug am jeweiligen Fahrort aufweisen müßte, wenn es genau auf der Bremskurve geführt würde. Die Bremskurvenberechnung ermittelt diese Geschwindigkeit nach der Beziehung $Vo = \sqrt{2as' \cdot xd}$. Die Korrekturverzögerung ak wirkt sich nicht voll sondern nur zu einem bestimmten Anteil auf die Bestimmung der dem FUZZY-Beschleunigungsregler R2 zuzuführenden Eingangsgröße ad aus. Der FUZZY-Beschleunigungsregler R2, der die Differenz-Beschleunigung ad aus der vorausberechneten und korrigierten Soll-Beschleunigung ae + f · ak und der Ist-Beschleunigung ai des Fahrzeugs in ein entsprechendes Stell-Kraftinkrement für die Fahrzeugsteuerung umsetzt, ist der gleiche Regler, der auch bei den Regleranordnungen nach Figur 3 und Figur 6 zur Anwendung kommt; die Rulebase, nach denen die Soll-Kraft bestimmt wird, ist in allen Fällen die gleiche.

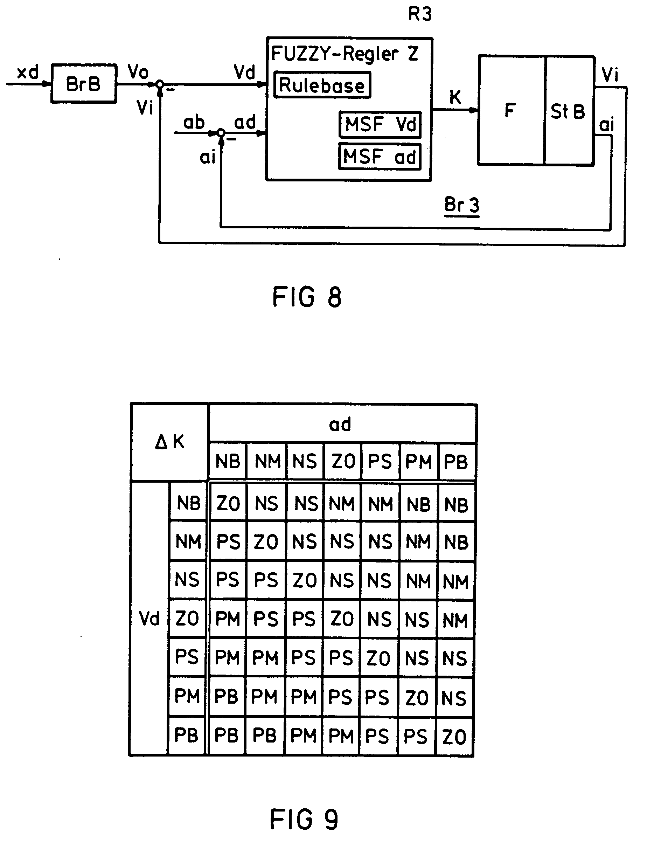

Mit Hilfe der in Figur 7 dargestellten Regleranordnung wird die Ist-Geschwindigkeit des Fahrzeugs nach dem Aufbau der Verzögerung an die Soll-Geschwindigkeit des Fahrzeugs, wie sie sich aus der Soll-Bremskurve ergibt, herangeführt. Damit ist es möglich, den jeweiligen Zielpunkt exakt auf der Soll-Bremskurve mit der Zielgeschwindigkeit zu erreichen, allerdings nur dann, wenn sich das Bremsverhalten des Fahrzeugs in Zielpunktnähe nicht markant ändert von seinem vorherigen Bremsverhalten. Vielfach ändert sich jedoch das Bremsverhalten bei sehr niedrigen Geschwindigkeiten markant, und zwar deshalb, weil z. B. elektrische Bremsen bei sehr niedrigen Geschwindigkeiten zunehmend unwirksam werden und weil zu deren Kompensation im Nahbereich des Zielpunktes pneumatische Bremsen wirksam geschaltet werden. Um auch bei Fahrzeugen mit dem vorstehend skizzierten, schlecht reproduzierbaren Bremsverhalten eine optimale d. h. zielpunktgenaue und ruckfreie Zielbremsung herbeizuführen, wird im Nahbereich des Zielpunktes die Reglerstruktur des Fahrzeuges nochmals geändert. Die dann wirksame Reglerstruktur ist in Figur 8 dargestellt. Der ebenfalls in FUZZY-Technik realisierte Zielpunktregler R3 verarbeitet als Eingangsgrößen die Differenzgeschwindigkeit Vd aus der optimalen Soll-Geschwindigkeit Vo, wie sie sich aus der Bremskurvenberechnung ergibt, und der Ist-Geschwindigkeit Vi sowie eine Differenzverzögerung ad, die sich ergibt aus einer betrieblichen Verzögerung ab und der über den Störgrößenbeobachter ermittelten Ist-Verzögerung ai des Fahrzeugs. Die betriebliche Verzögerung ab ist eine Verzögerung, die von der Strecke her vorgegeben wird. Bei dem FUZZY-Zielpunktregler R3 handelt es sich damit um einen zweidimensionalen Regler, wie er im Prinzip als FUZZY-Geschwindigkeitsregler R1 in Figur 1 verwendet ist, nur, daß seine Rulebase völlig verschieden ist von der dieses Reglers. Die Rulebase des FUZZY-Zielpunktreglers R3 ist in Figur 9 angegeben. Die in Figur 8 dargestellte Regleranordnung wird wirksam, sobald das Fahrzeug einen bestimmten niedrigen Geschwindigkeitswert erreicht hat oder einen bestimmten Streckenpunkt in Zielpunktnähe passiert. Für den Moment, an dem die Zielpunktregelung einsetzt, kann davon ausgegangen werden, daß die Ist-Geschwindigkeit Vi des Fahrzeugs sich der Soll-Geschwindigkeit Vs angepaßt hat. Es ist deshalb nicht erforderlich, noch eine Korrekturbeschleunigung ak zu berücksichtigen, die eine Angleichung von Soll- und Ist-Geschwindigkeit bewirken soll. Aus diesem Grunde wird die Differenz-Geschwindigkeit Vd aus der sich aus der Soll-Bremskurve ergebenden optimalen Geschwindigkeit Vo und der Ist-Geschwindigkeit Vi auf den einen Eingang des Zielpunktreglers gegeben. Der andere Eingang wird mit dem Wert einer Differenz-Verzögerung ad aus der betrieblichen Verzögerung ab und der vom Störgrößenbeobachter festgestellten Ist-Verzögerung ai des Fahrzeugs beaufschlagt. Die dem Zielpunktregler R3 zugeführten scharfen Eingangswerte werden in gleicher Weise wie bei dem Geschwindigkeitsregler nach Figur 3 zunächst fuzzyfiziert, wobei bestimmt wird, welchen Anteil diese Größen an den einzelnen Wertebereichen der Rulebase haben, dann werden die Regeln der Rulebase aktiviert, bei denen diese Anteile von Null verschieden sind (membership function MSF > 0), dann werden diese Regeln durch Inferenzierung zur Anwendung gebracht und aus den sich ergebenden Sollkraftbereichen und den Anteilen der Ausgangswerte an diesen Bereichen wird durch Defuzzyfizierung der Wert der Soll-Kraft Δ K für die Bremsensteuerung gebildet. Wiederum sind dabei regelmäßig vier Regeln anzuwenden.

Mit den vorstehend näher erläuterten Regleranordnungen ist es möglich, ein spurgeführtes Fahrzeug in jeder Betriebsphase, also sowohl beim Beschleunigen, als auch bei der Beharrungsfahrt und beim Bremsen ruckfrei an einem vorgegebenen Fahrprofil entlangzuführen, weil die Reglerstrukturen der jeweiligen Betriebsphase optimal angepaßt sind. Für die Implementierung der Regler bedarf es keiner ausgeprägten Kenntnis über das Modellverhalten des zu steuernden Fahrzeugs; im Zweifelsfall, nämlich dann, wenn das Regelergebnis noch nicht optimal ist, müssen einzelne der in den Rulebases niedergelegten Regeln so verändert werden, daß sich ein besseres Regelergebnis einstellt oder die Wertebereiche der Einund/oder Ausgangsgrößen müssen anders festgelegt werden.

## Patentansprüche

1. Einrichtung zur Steuerung eines spurgeführten Fahrzeugs, insbesondere eines Eisenbahnfahrzeugs, entlang eines vorgegebenen Soll-Geschwindigkeits-Fahrprofils unter Verwendung mindestens eines Reglers (BrR, VR, R1, R2, R3) zum Verknüpfen von die Fahrzeugbewegung auf einer Strecke beschreibenden Soll- und Ist-Größen, wobei mindestens bei Beginn jedes Bremsvorganges die Ist-Beschleunigung des Fahrzeugs einer vorgebbaren Soll-Beschleunigung nachgeführt wird,
**dadurch gekennzeichnet,**
daß dieser mindestens eine Regler als FUZZY-Regler (R1, R2, R3) ausgeführt ist, der in der Lage ist sowohl für die Beschleunigungs- als auch für die Beharrungs- und die Bremsphase die jeweilige Ist-Beschleunigung des Fahrzeugs nach Maßgabe von in ihm implementierten Rulebases einer jeweiligen vorgebbaren Soll-Beschleunigung (as, as', ae + f.ak, ab) nachzuführen, wobei der Regler (R1, R2, R3) derart arbeitet, daß die Soll-Beschleuniging (as) in der Beschleunigungs- und Beharrungsphase (V) aus der Differenz von Soll- (Vs) und Ist-Geschwindigkeit (Vi) des Fahrzeugs sowie seiner jeweiligen Ist-Beschleunigung (ai) bestimmt wird, und daß die Soll-Beschleunigung (as', ae + f.ak) in der Bremsphase aus einem vorgebbaren Bremsverlauf bestimmt wird, der sich in mindestens drei Teilphasen untergliedert,
von denen die erste (Br1) den Aufbau der Verzögerung bis zum Erreichen einer aus einer vorgegebenen Soll-Bremskurve ableitbaren Soll-Bremsverzögerung (as'),
die zweite (Br2) das Angleichen der Ist-Geschwindigkeit (Vi) an eine aus der vorgegebenen Soll-Bremskurve rechnerisch bestimmten Soll-Geschwindigkeit (Vo) und die dritte (Br3) den Abbau der Ist-Verzögerung (ai)und die Zielbremsung im Nahbereich eines Zielpunktes vorsieht, wobei in der dritten Teilphase die aufzubringende Bremskraft (K) aus der Differenz einer betrieblich vorgegebenen Beschleunigung (ab) und der am jeweiligen Fahrort vorhandenen Ist-Beschleunigung (ai) des Fahrzeugs sowie der dort vorhandenen Differenz aus seiner Soll- (Vo) und seiner Ist-Geschwindigkeit (Vi) ermittelt wird.

2. Einrichtung nach Anspruch 1,
**dadurch gekennzeichnet,**
daß das Wechseln von dem einen auf einen anderen Regelungsvorgang auf dem Fahrzeug vom Erreichen vorgebbarer Beschleunigungs- und Geschwindigkeitswerte oder vom Erreichen vorgebbarer Streckenpunkte abhängig gemacht ist.

3. Einrichtung nach Anspruch 1,
**dadurch gekennzeichnet,**
daß die den Fahrzeugantrieb steuernden FUZZY-Regler (R1, R2, R3) zyklisch wirksam sind und nach Maßgabe der ihnen zugeführten Eingangsgrößen und der für sie hinterlegten Rulebases ein Soll-Kraftinkrement bilden, dieses zur jeweils vorhandenen Soll-Kraft addieren und den Soll-Wert (K) der Antriebssteuerung zuführen.

4. Einrichtung nach Anspruch 3,
**dadurch gekennzeichnet,**
daß die für die Regelung verwendeten Werte der Ist-Beschleunigung (ai) und der Ist-Geschwindigkeit (Vi) Werte sind, die aus gemessenen Wegstrecken sowie aus den an das Fahrzeug ausgegebenen Stellgrößen (K) abgeleitet sind.

5. Einrichtung nach Anspruch 3
**dadurch gekennzeichnet,**
daß für die Steuerung des Fahrzeugs in der Beschleunigungs- und Beharrungsphase (V) zwei in Kaskade geschaltete FUZZY-Regler (R1, R2) vorgesehen sind, von denen der eine (R1) als zweidimensionaler Geschwindigkeitsregler ausgeführt ist und aus der Differenz (Vd) von Soll- und Ist-Geschwindigkeit sowie der Ist-Verzögerung (ai) des Fahrzeugs nach Maßgabe einer für diese Größen geltenden Rulebase eine Soll-Verzögerung (as) bestimmt und diese dem anderen FUZZY-Regler (R2) zuführt, der als eindimensionaler Beschleunigungsregler ausgeführt ist und aus der Differenz von Soll- und Ist-Verzögerung ein proportionales Soll-Kraftinkrement bildet.

6. Einrichtung nach Anspruch 3
**dadurch gekennzeichnet,**
daß zur Geschwindigkeitssteuerung während der ersten Teilbremsphase (Br1)ein eindimensionaler FUZZY-Beschleunigungsregler (R2) vorgesehen ist, dem die durch Subtraktion der jeweiligen Ist-Verzögerung (ai) von der durch den vorgegebenen Soll-Bremsverlauf vorgegebenen Soll-Verzögerung (as) gebildete Regelabweichung (ad) als Eingangsgröße zugeführt ist und der diese Größe umsetzt in ein proportionales Soll-Kraftinkrement für die Antriebssteuerung.

**7.** Einrichtung nach Anspruch 3,
**dadurch gekennzeichnet,**
daß zur Geschwindigkeitssteuerung während der zweiten Teilbremsphase (Br2) ein eindimensionaler FUZZY-Beschleunigungsregler (R2) vorgesehen ist, dem die durch Subtraktion der jeweiligen Ist-Verzögerung (ai) von einer Soll-Verzögerung (ae + f.ak) gebildete Regelabweichung (ad) als Eingangsgröße zugeführt ist und der diese Größe umsetzt in ein Soll-Kraftinkrement für die Antriebssteuerung, wobei die Soll-Verzögerung bestimmt wird aus dem jeweiligen Abstand (xd) des Fahrzeugs zum Zielpunkt und der Ist-Geschwindigkeit (Vi) des Fahrzeugs und wobei der so ermittelte Wert der Soll-Bremsverzögerung (ae) korrigiert wird nach Maßgabe der jeweiligen Differenz (Vd) aus der aus der Soll-Bremskurve rechnerisch bestimmten Soll-Geschwindigkeit (Vo) und der Ist-Geschwindigkeit (Vi) des Fahrzeugs am jeweiligen Fahrort.

**8.** Einrichtung nach Anspruch 3,
**dadurch gekennzeichnet,**
daß zur Geschwindigkeitssteuerung während der dritten Teilbremsphase (Br3)ein zweidimensionaler FUZZY-Zielpunktregler (R3) vorgesehen ist, der aus der Differenz (Vd) der für den jeweiligen Fahrort des Fahrzeugs geltenden, aus der Soll-Bremskurve und dem jeweiligen Abstand (xd) zum Zielpunkt errechenbaren Soll-Geschwindigkeit (Vo) und der Ist-Geschwindigkeit (Vi) sowie der Differenz (ad) einer betrieblichen Verzögerung (ab) und der tatsächlichen Verzögerung (ai) ein Soll-Kraftinkrement für die Antriebssteuerung des Fahrzeugs bildet.

**9.** Einrichtung nach Anspruch 5, 6 und 7,
**dadurch gekennzeichnet,**
daß für die Geschwindigkeitssteuerung während der Anfahr- und Beharrungsphase sowie der ersten und zweiten Teilbremsphase jeweils der gleiche FUZZY-Beschleunigungsregler (R2) verwendet ist.

**10.** Einrichtung nach Anspruch 7 oder 8,
**dadurch gekennzeichnet,**
daß entlang der Strecke im Abstand vor einem Zielpunkt mindestens eine vom vorüberlaufenden Fahrzeug erkennbare Ortsmarke angeordnet ist, deren Abstand zum Zielpunkt der Fahrzeugregelung bekannt ist oder von der Ortsmarke abfragbar ist und daß das Fahrzeug diese Ortsmarke zur Korrektur seines Ortungsergebnisses verwendet.

**11.** Einrichtung nach Anspruch 10,
**dadurch gekennzeichnet,**
daß mindestens drei Ortsmarken vorgesehen sind.

## Claims

**1.** Device for controlling a railborne vehicle, in particular a railway vehicle, along a prescribed desired speed/driving profile by using at least one controller (BrR, VR, R1, R2, R3) to combine desired and actual values describing the vehicle movement on a line, the actual acceleration of the vehicle tracking a prescribable desired acceleration, at least at the start of each braking operation, characterized in that this at least one controller is designed as a FUZZY controller (R1, R2, R3) which, both for the acceleration phase and for the steady-state phase and the braking phase, is capable of making the respective actual acceleration of the vehicle track a respective prescribable desired acceleration (as, as', ae + f.ak, ab) in accordance with rule bases implemented in said vehicle, the controller (R1, R2, R3) operating in such a way that the desired acceleration (as) in the acceleration and steady-state phase (v) is determined from the difference between the desired speed (Vs) and actual speed (Vi) of the vehicle, as well as from its respective actual acceleration, and in that the desired acceleration (as', ae + f.ak) is determined in the braking phase from a prescribable braking profile which is subdivided into at least three subphases, of which the first (Br1) provides for the build-up of the deceleration as far as reaching a desired braking deceleration (as') derivable from a prescribed desired braking curve, the second (Br2) provides for equalizing the actual speed (Vi) at a desired speed (Vo) determined by calculation from the prescribed desired braking curve, and the third (Br3) provides for the decrease of the actual deceleration (ai) and the target braking in the vicinity of a target point, the braking force (K) to be applied being determined in the third subphase from the difference between an operationally prescribed acceleration (ab) and the actual acceleration (ai), present at the respective driving location, of the vehicle, as well as from the difference present there between its desired speed (Vo) and its actual speed (Vi).

**2.** Device according to Claim 1, characterized in that changing from one to another control operation on the vehicle is rendered a function of reaching prescribable acceleration values and speed values or of reaching prescribable points on the line.

**3.** Device according to Claim 1, characterized in that FUZZY controllers (R1, R2, R3) controlling the vehicle drive are effective cyclically and, depending on the input variables fed to them and on the rule bases stored for them, form a desired force increment, add the latter to the respectively present desired force, and feed the desired value (K) to the drive controller.

4. Device according to Claim 3, characterized in that the values of the actual acceleration (ai) used for controlling, and the actual speed (Vi) are values which are derived from measured route distances and from the manipulated variables (K) output to the vehicle.

5. Device according to Claim 3, characterized in that there are provided for controlling the vehicle in the acceleration and steady-state phase (V) two FUZZY controllers (R1, R2) which are connected in cascade and of which one (R1) is designed as a two-dimensional speed controller and determines, from the difference (Vd) between the desired and actual speed and from the actual deceleration (ai) of the vehicle in accordance with a rule base valid for these variables, a desired deceleration (as) which it feeds to the other FUZZY controller (R2), which is designed as a one-dimensional acceleration controller and forms a proportional desired force increment from the difference between the desired and actual deceleration.

6. Device according to Claim 3, characterized in that there is provided for controlling the speed during the first braking subphase (Br1) a one-dimensional FUZZY acceleration controller (R2) which is fed the system deviation (ad), formed by subtracting the respective actual deceleration (ai) from the desired deceleration (as) prescribed by the prescribed desired braking profile, as input variable, and which converts said variable into a proportional desired force increment for the drive controller.

7. Device according to Claim 3, characterized in that there is provided for controlling the speed during the second braking subphase (Br2) a one-dimensional FUZZY acceleration controller (R2) which is fed the system deviation (ad), formed by subtracting the respective actual deceleration (ai) from a desired deceleration (ae + f.ak), as input variable, and converts said variable into a desired force increment for the drive controller, the desired deceleration being determined from the respective distance (xd) of the vehicle from the target point, and from the actual speed (Vi) of the vehicle, and the value thus determined of the desired braking deceleration (ae) is corrected in accordance with the respective difference (Vd) between the desired speed (Vo) determined by calculation from the desired braking curve and the actual speed (Vi) of the vehicle at the respective driving location.

8. Device according to Claim 3, characterized in that there is provided for controlling the speed during the third braking subphase (Br3) a two-dimensional FUZZY target point controller (R3) which forms a desired force increment for the drive controller of the vehicle from the difference (Vd) between the desired speed (Vo), which is valid for the respective driving location of the vehicle and can be calculated from the desired braking curve and the respective distance (xd) from the target point, and the actual speed (Vi), as well as from the difference (ad) between an operational deceleration (ab) and the actual deceleration (ai).

9. Device according to Claims 5, 6 and 7, characterized in that in each case the same FUZZY acceleration controller (R2) is used for controlling the speed during the starting and steady-state phase as well as the first and second braking subphase.

10. Device according to Claim 7 or 8, characterized in that arranged along the line at a distance upstream of a target point is at least one location marker which can be recognised by a passing vehicle, whose distance from the target point is known to the vehicle controller or can be found by interrogating the location marker, and in that the vehicle uses this location marker to correct its locating result.

11. Device according to Claim 10, characterized in that at least three location markers are provided.

**Revendications**

1. Dispositif pour commander un véhicule guidé, notamment un véhicule ferroviaire, sur un profil de marche à vitesse de consigne prescrit, en utilisant au moins un régulateur (BrR, VR, R1 ,R2,R3) pour combiner des valeurs de consigne et des valeurs réelles décrivant le déplacement du véhicule sur un itinéraire, l'accélération réelle du véhicule étant, au moins au début de chaque opération de freinage, asservie à une accélération de consigne pouvant être prescrite,

caractérisé

en ce que ce au moins un régulateur est réalisé en régulateur (R1, R2,R3) à logique floue, qui est, aussi bien pour la phase d'accélération que pour la phase de régime de croisière et pour la phase de freinage, en mesure, suivant ce qui est déterminé par des règles de bases qui y sont mises en oeuvre, d'asservir l'accélération réelle du véhicule à une accélération (as, as', ae + f.ak, ab) de consigne pouvant être prescrite, le régulateur (R1, R2, R3) travaillant de telle manière que l'accélération (as) de consigne lors de la phase (V) d'accélération et de régime de croisière est déterminée à partir de la différence entre la vitesse (Vs) de consigne et la vitesse (Vi) réelle du véhicule ainsi qu'à partir de son accélération (Ai) réelle,

et en ce que l'accélération (as', ae + f.ak) de consigne lors de la phase de freinage est déterminée à partir d'une fonction de freinage qui se décompose au moins en trois phases partielles,

dont la première (Br1) prévoit l'établissement de la décélération jusqu'à ce que l'on atteigne une décélération (as') de freinage de consigne qui peut être déduite d'une courbe de freinage de consigne prescrite,

dont la deuxième (Br2) prévoit l'adaptation de la vitesse (Vi) réelle à une vitesse (Vo) de consigne déterminée par ordinateur à partir de la courbe de freinage de consigne prescrite

et dont la troisième (Br3) prévoit la suppression de la décélération (ai) réelle et le freinage par la méthode du tir au but à proximité d'un point cible, la force (K) de freinage étant, lors de la troisième phase partielle, déterminée à partir de la différence entre une accélération (ab) prescrite pour la circulation et l'accélération (ai) réelle, présente à l'emplacement de roulement, du véhicule ainsi qu'à partir de la différence qui y est présente entre sa vitesse (Vo) de consigne et sa vitesse (Vi) réelle.

2. Dispositif suivant la revendication 1, caractérisé en ce que

le passage d'une opération de régulation à une autre est rendu dépendant sur le véhicule du fait que l'on atteint des valeurs d'accélération et de vitesse pouvant être prescrites ou du fait que l'on atteint des points de l'itinéraire pouvant être prescrites.

3. Dispositif suivant la revendication 1, caractérisé en ce que

les régulateurs (R1,R2,R3) à logique floue commandant la propulsion du véhicule sont actifs de manière cyclique et, suivant ce qui est déterminé par les valeurs d'entrée qui leur sont envoyées et les règles de base qui y sont mises en mémoire, forment un incrément de force de consigne, additionnent cet incrément à la force de consigne présente et envoient la valeur (K) de consigne à la commande de propulsion.

4. Dispositif suivant la revendication 3, caractérisé en ce que

les valeurs de l'accélération (ai) réelle et de la vitesse (Vi) réelle utilisée pour la régulation sont des valeurs qui sont déduites d'itinéraires de trajet mesurés ainsi que des grandeurs (K) réglantes envoyées au véhicule.

5. Dispositif suivant la revendication 3, caractérisé en ce que

il est prévu pour la commande du véhicule lors de la phase (V) d'accélération et de vitesse de croisière deux régulateurs (R1,R2,R3) à logique floue, qui sont branchés en cascade, dont l'un (R1) est réalisé en régulateur de vitesse bi-dimensionnel et détermine à partir de la différence (Vd) entre la vitesse de consigne et la vitesse réelle ainsi qu'à partir de la décélération (ai) réelle du véhicule, suivant ce qui est déterminé par une règle de base valable pour ces grandeurs, une décélération (as) de consigne et l'envoie à l'autre régulateur (R2) à logique floue, qui est réalisé en régulateur d'accélération unidimensionnel et forme un incrément de force de consigne proportionnel à partir de la différence entre la décélération de consigne et la décélération réelle.

6. Dispositif suivant la revendication 3, caractérisé en ce que

il est prévu pour maîtriser la vitesse pendant la première phase (Br1) de freinage partielle un régulateur (R2) d'accélération à logique floue unidimensionnel, auquel il est envoyé comme grandeur d'entrée l'écart (ad) de régulation formé en soustrayant la décélération (ai) réelle associée de la décélération (as) de consigne prescrite par la fonction de freinage de consigne prescrite et qui convertit cette grandeur en un incrément de force de consigne proportionnel pour la commande de propulsion.

7. Dispositif suivant la revendication 3, caractérisé en ce que

il est prévu pour maîtriser la vitesse pendant la deuxième phase (Br2) de freinage partielle, un régulateur (R2) d'accélération à logique floue unidimensionnel, auquel il est envoyé comme grandeur d'entrée l'écart (ad) de régulation formé en soustrayant la décélération (ai) réelle associée d'une décélération (ae + f.ak) de consigne et qui convertit cette grandeur en un incrément de force de consigne pour la commande de propulsion, la décélération de consigne étant déterminée à partir de la distance (xd) associée du véhicule au point cible et à partir de la vitesse (Vi) réelle du véhicule, et la valeur ainsi déterminée de la décélération (ae) de freinage de consigne étant corrigée suivant ce qui est déterminé par la différence (Vd) entre la vitesse (Vo) de consigne déterminée par ordinateur à partir de la courbe de freinage de consigne et la vitesse (Vi) réelle du véhicule à l'emplacement de roulement.

8. Dispositif suivant la revendication 3, caractérisé en ce que

il est prévu pour maîtriser la vitesse pendant la troisième phase (Br3) de freinage partielle un régulateur (R3) de point cible à logique floue bidimensionnel, qui forme un incrément de force de consigne pour la commande de propulsion du véhicule à partir de la différence (Vd) entre la vitesse (Vo) de consigne, valable pour l'emplacement de roulement associé du véhicule et pouvant être calculée à partir de la courbe de freinage de consigne et de la distance (xd) associé par rapport au point cible, et la valeur (Vi) réelle, ainsi qu'à partir de la différence (ad) entre une décélération (ab) de circulation et la décélération (ai) réelle.

9. Dispositif suivant les revendications 5,6 et 7,
   caractérisé en ce que
   l'on utilise le même régulateur (R2) d'accélération à logique floue pour maîtriser la vitesse pendant la phase de démarrage et de vitesse de croisière ainsi que pendant la première et la deuxième phase de freinage partielle.

10. Dispositif suivant la revendication 7 ou 8,
    caractérisé en ce que
    il est disposé sur l'itinéraire, à distance en amont d'un point cible, au moins un repère localisé qui peut être identifié par un véhicule passant devant lui et dont la distance au point cible est connue de la régulation du véhicule où peut être demandé par le repère localisé, et en ce que le véhicule utilise ce repère localisé pour corriger son résultat de localisation.

11. Dispositif suivant la revendication 10,
    caractérisé en ce que
    il est prévu au moins trois repères localisés.

Neues Ziel ?          Stop          Ziel erreicht ?

V          Br 3

Bremseinsatz -
punkt erreicht ?          Umschaltort /
-geschw. erreicht ?

Br 1          Br 2

Soll - Verzögerung
erreicht ?          FIG 1

ATP

xZ  VZ          VZ          Vi

DG          BE

VS          ab     xZ          xi          ai

VR

U          F          St B

BrR

xi          ai

Vi

FIG 2

FIG 3

| as | | Vd | | | | | | |
|---|---|---|---|---|---|---|---|---|
| | | NB | NM | NS | ZO | PS | PM | PB |
| ai | NB | NB | NM | NS | PB | PB | PB | PB |
| | NM | NB | NM | NS | PM | PS | PM | PM |
| | NS | NB | NS | NS | PS | PS | PS | PS |
| | ZO | NB | NM | NS | ZO | PS | PM | PS |
| | PS | NB | NM | NS | NS | PS | PS | PM |
| | PM | NB | NM | NM | NM | PS | PM | PB |
| | PB | NB | NM | NM | NB | PS | PM | PB |

FIG 4

| ΔK | | ad | | | | | | |
|---|---|---|---|---|---|---|---|---|
| | | NB | NM | NS | ZO | PS | PM | PB |
| | | NB | NM | NS | ZO | PS | PM | PB |

FIG 5

EP 0 735 963 B1

FIG 6

FIG 7

14

R3

FUZZY-Regler Z

Rulebase

MSF Vd

MSF ad

xd → BrB → Vo

Vi

ab → ad

ai

K → F | St B → Vi

ai

Br 3

**FIG 8**

| ΔK | | ad | | | | | | |
|---|---|---|---|---|---|---|---|---|
| | | NB | NM | NS | Z0 | PS | PM | PB |
| | NB | Z0 | NS | NS | NM | NM | NB | NB |
| | NM | PS | Z0 | NS | NS | NS | NM | NB |
| | NS | PS | PS | Z0 | NS | NS | NM | NM |
| Vd | Z0 | PM | PS | PS | Z0 | NS | NS | NM |
| | PS | PM | PM | PS | PS | Z0 | NS | NS |
| | PM | PB | PM | PM | PS | PS | Z0 | NS |
| | PB | PB | PB | PM | PM | PS | PS | Z0 |

**FIG 9**